# NEW EUROPEAN PATENT SPECIFICATION

(11) **EP 0 528 572 B2**
(45) Date of publication and mention of the opposition decision: **06.07.2005**
(45) Mention of the grant of the patent: 15.10.1997
(21) Application number: 92307041.1
(22) Date of filing: 03.08.1992
(51) Int. Cl.: H04L 29/06

(54) **Device for encrypting and decrypting of signals**
Vorrichtung zur Verschlüsselung und Entschlüsselung von Signalen
Appareil pour le cryptage et le decryptage de signaux

(30) Priority: 16.08.1991 ZA 916493; 07.05.1992 ZA 923306
(43) Date of publication of application: 24.02.1993
(73) Proprietor: CONTROL LOGIC (PROPRIETARY) LIMITED, Durban Natal Province (ZA); MERLIN GERIN S.A. (PROPRIETARY) LIMITED, Midrand, Gauteng (ZA)
(72) Inventor: Pucci, Franco Giovanni, Durban, Natal Province R S A (ZA); Moore, David Thomas, Basingstoke, Hampshire (GB); Celine, David Harry, Natal Province R S A (ZA); Gani, Abdul Rehman, Westville, Natal Province R S A (ZA)
(74) Representative: Barlow, Roy James

(56) References cited:
- EP-A- 0 209 811
- EP-A- 0 282 992
- WO-A-87/01484
- US-A- 4 281 315
- PHILIPS TELECOMMUNICATION REVIEW vol. 47, no. 3, September 1989, Hilversum, NL, pp 1-19, XP72642; R.C. FERREIRA: 'THE SMART CARD: A HIGH SECURITY TOOL IN EDP'

## Description

### INTRODUCTION

**THIS INVENTION** relates to an electronic device for encoding or decoding electrical signals.

### BACKGROUND TO THE INVENTION

In certain applications such as remote alarm systems and access control systems, which require secure data transmission, data in encrypted form is transmitted by a transmitter to a receiver. The received encrypted data is then decrypted, validated by a control unit, and then further processed according to the requirements of the application.

Various methods of data encryption are known in the art. In most methods, data is encrypted at the transmitter by combining it together with an encryption key according to a fixed algorithm. The encrypted data is decrypted at the receiver by applying a converse algorithm to the encrypted data together with the same encryption key. The security of such a communication system will obviously be compromised if the encryption key becomes known to unauthorised users.

The security of encrypted data transmission may be increased in various ways. For example, the encryption key may be made to vary randomly and used only once. Such an encryption key is known as a "one time key". Alternatively, the encryption key may be fixed and the data to be combined with the key may be varied. This method of data encryption is known in the art as "code hopping".

Both of these methods of data encryption will ensure that no two data transmissions are identical. This principle ensures that encrypted data which is intercepted during transmission and which is subsequently retransmitted by an unauthorised user, cannot be used to disable the alarm system or to bypass the access control system.

Japanese Patent Number 63-155930 discloses a method of providing encrypted data for secure transmission across a public data network. The method comprises generating an encryption key, and the transmission of the key from the transmitter to the receiver, or vice-versa, across the public data network. Network processors at the transmitter and receiver then encrypt and decrypt data transmitted across the network by using the common encryption key. The network processors also format the encrypted data according to a fixed protocol suitable for transmission across the network.

Further methods and apparatus for secure communication are disclosed in the following patent numbers: WO 89/10666 which relates to a protocol which is used for the transmission of encrypted data; GB 2 124 856 which relates to a multi-level encryption scheme applicable to the broadcasting of encrypted signals; and EP 0 300 824 which discloses a method of producing a continuous sequence of one-time encryption keys.

Japanese Patent No 61-205048 relates to a communication apparatus which is configurable to receive or transmit data according to one of a number of different selectable communication protocols. The data is not encrypted prior to transmission by the communication apparatus.

US-A-4 281 315 teaches a polling system for sequentially interrogating a plurality of different data terminals and receiving messages therefrom, in which communication with each data terminal may utilise a different communication protocol, the details of which are stored in a controller. The data communication between the data terminals and the common polling station is "in clear".

A similar arrangement is disclosed in WO 87/01484 in which a host processor and a plurality of remote processing devices communicate over a local area network. A different communication protocol may be used to control the transfer of data between the host processor and each of the remote processing devices. The transfer of data takes place "in clear".

An exposition of the use of smart cards in computer security applications is presented in "The Smart Card A High Security Tool in EDP". PTR Philips Telecommunication and Data Systems Review, Vol 47, No 3, September 1989. The application of smart cards in providing secure access to computing resources and in managing encryption keys in large computer networks is outlined.

EP-A2-0,209,811 discloses an electronic coding device for encrypting and decrypting data signals. The device comprises processors for coding data in accordance with a predetermined decryption algorithm and in accordance with two predetermined encryption algorithms. Each processor has an input for receiving a digital input signal and an output for generating a coded digital output signal. The device also comprises a memory to store initial parameters such that the output of the device is compatible with hardware to which it is connected.

EP- A2-0 282 992 ddiscloses an electronic coding device. The device comprises a processor and a memory. The processor selects from the memory the appropriate communication protocol according to a received classification code and then executes communication by using the selected communication protocol.

The efficiency of data encryption using code hopping techniques is reduced when data encryption is performed using standard types of integrated circuits, because the word length of these integrated circuits is small. This is problematic in instances where more alarm systems or access control systems are manufactured than there are distinct codes available, as duplication is inevitable and security is thereby reduced.

In one particular type of remote alarm system, the number of distinct codes is increased by widening the word length of the algorithms used for encryption and decryption. When this is done by using discrete standard types of integrated circuits, the resulting electronic circuits for encryption and decryption are large, complex, unnecessarily expensive and have large power consumptions.

It is an object of this invention to provide a device which will enable the encryption or decryption of electrical signals.

According to the present invention, there is provided an electronic coding device for selectively encrypting or decrypting data signals, comprising:
a processor to code digital data in accordance with a selectable one of a predetermined encryption and a predetermined decryption algorithm, the processor having an input for receiving a digital input signal and an output for generating a coded digital output signal; and
a configuration storage memory connected to the processor,
characterised in that
the configuration storage memory is instructable to select one of the predetermined encryption algorithm and predetermined decryption algorithm and to convert the coded digital output signal produced by the processor after encryption and after decryption to conform to any one of a number of predetermined protocols.

The invention extends to provide a method of configuring an electronic coding device tor selectively encrypting or decrypting data signals, comprising the steps of:
interfacing a programming means to a configuration storage memory connected to a processor for coding digital data in accordance with a selected one of a predetermined encryption and a predetermined decryption algorithm, the processor having an input for receiving a digital input signal and an output for generating a coded digital output signal; and
instructing the configuration storage memory to select one of the number of predetermined algorithms,
characterised in that
it includes the further steps of instructing the configuration storage memory to select one of the predetermined encryption and predetermined decryption algorithm, and instructing the configuration storage memory to selectively convert the coded digital output signal produced by the processor after encryption and after decryption to conform to any one of a number of predetermined protocols.

### BRIEF DESCRIPTION OF THE DRAWINGS

A preferred embodiment of the invention is described below, by way of example only, and with reference to the accompanying drawings, in which:
- Figure 1: is a perspective view of a packaged integrated circuit;
- Figure 2: is a schematic representation of the pin layout of the integrated circuit of Figure 1;
- Figure 3: is a schematic block diagram of the integrated circuit of Figure 1;
- Figure 4: is a block diagram of coding logic for encrypting digital signals;
- Figure 5: is a block diagram of coding logic for decrypting digital signals; and
- Figure 6: is a block diagram of a programmer for configuring the integrated circuit of Figure 1.

### DETAILED DESCRIPTION Of THE DRAWINGS

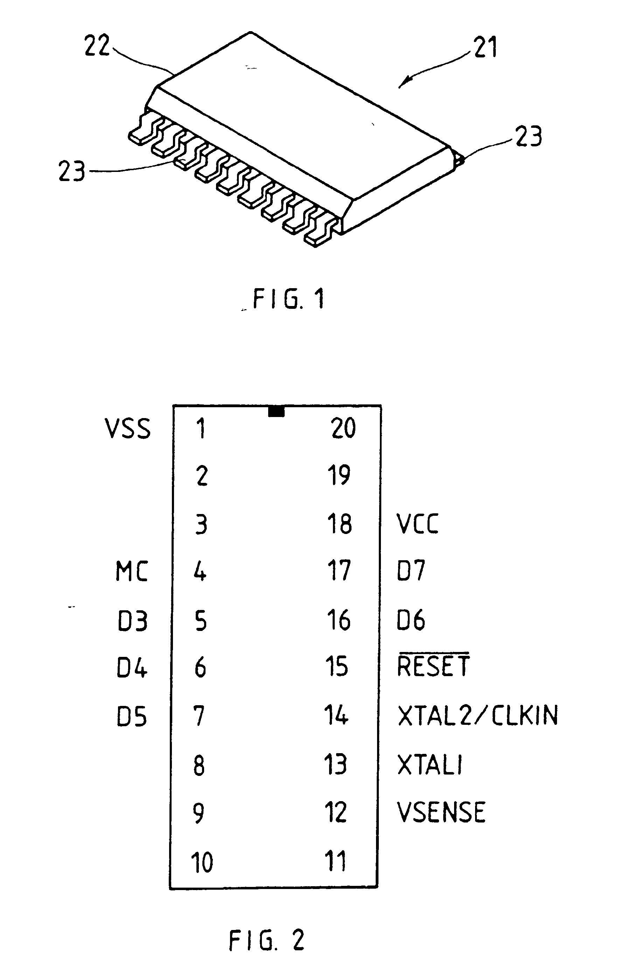

Referring to Figure 1, an electronic coding device is represented generally by numeral (21) and is, in this embodiment, an integrated circuit. The integrated circuit comprises a small wafer of semiconductor material (not shown), such as silicon, on which an electrical circuit is produced by means any one of a number of lithographic techniques which are well known in the art. The semiconductor wafer is encapsulated in a rectangular block of insulating plastics or ceramic material (22) to provide a degree of structural and environmental protection. Electrical connection to the semiconductor wafer is provided by a number of metallic pins (23), each pin protruding from the encapsulating block (22) and being in electrical contact with the semiconductor wafer. The pins (23) are arranged in two rows on opposing sides of the encapsulating block (22). The configuration of the pins indicated in Figure 1 is utilised for surface-mounting the integrated circuit (21) to a printed circuit board (not shown).

The pin configuration of the integrated circuit is indicated in Figure 2. The pins are arranged in a 20-pin dual-in-line (DIL) configuration and are individually indicated by numerals 1 to 20 in Figure 2. As indicated, only twelve of the pins are used, with the pins numbered 2, 3, 8, 9, 10, 11, 19 and 20 being unused.

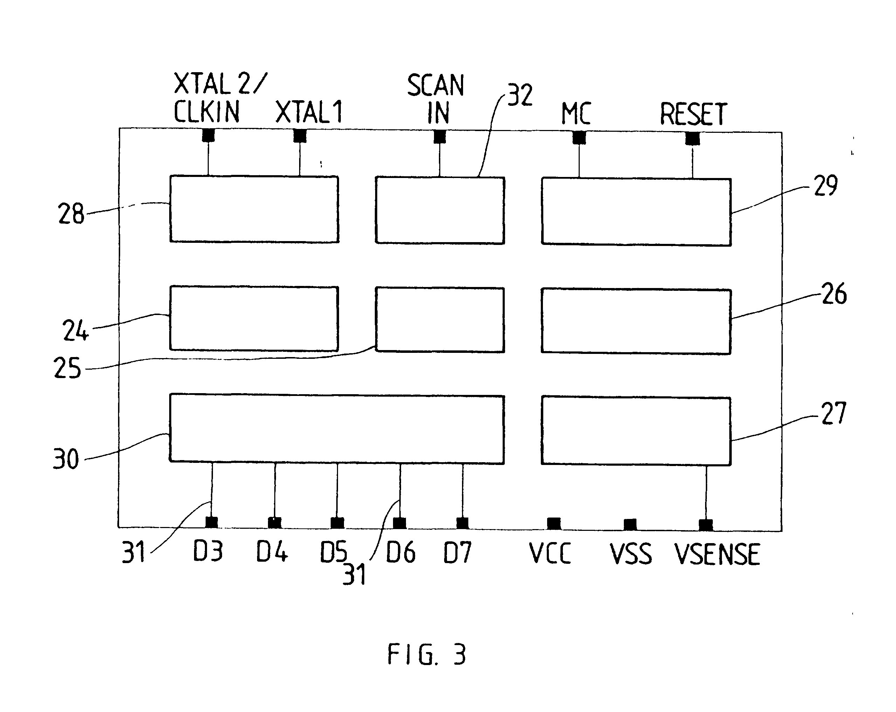

Referring now to Figure 3, a block diagram of the electrical circuit on the semiconductor wafer (not shown) of the integrated circuit of Figure 1, is indicated. The core of the electrical circuit is a microprocessor (24) such as the TMS370 8-bit microprocessor core available from Texas Instruments of Dallas, Texas in the USA. The microprocessor memory comprises 4 kilobytes of read-only memory (ROM) (25), 256 bytes of random-access memory (RAM) (26) and 256 bytes of electrically-erasable programmable read-only memory (EEPROM) (27). The ROM and EEPROM memories are non-volatile so that data stored in these memories is not lost when power is removed from the integrated circuit (21). A crystal oscillator and divide-by-2 clock generator (28) provides clock frequency for the micro-processor (24) while system control is provided by firmware (29). An input/output port (30) provides five general bidirectional input/output lines (31). The input/output lines are individually configurable under program control.

A fuse (32) may be selectively blown to disable external read access to the ROM, RAM and EEPROM memories to protect any sensitive data which might be stored in these memories. The fuse (32) is usually blown only after the integrated circuit (21) has been tested for correct operation after it has been manufactured. For use in applications where power consumption is critical, the integrated circuit (21) has a stopped mode in which all of the circuit activity is stopped but data in the RAM memory (26) is maintained. Data in the non-volatile ROM (25) and EEPROM (27) memories will not be lost in any event. The integrated circuit (21) can only be released from the stopped mode by an externally supplied reset signal.

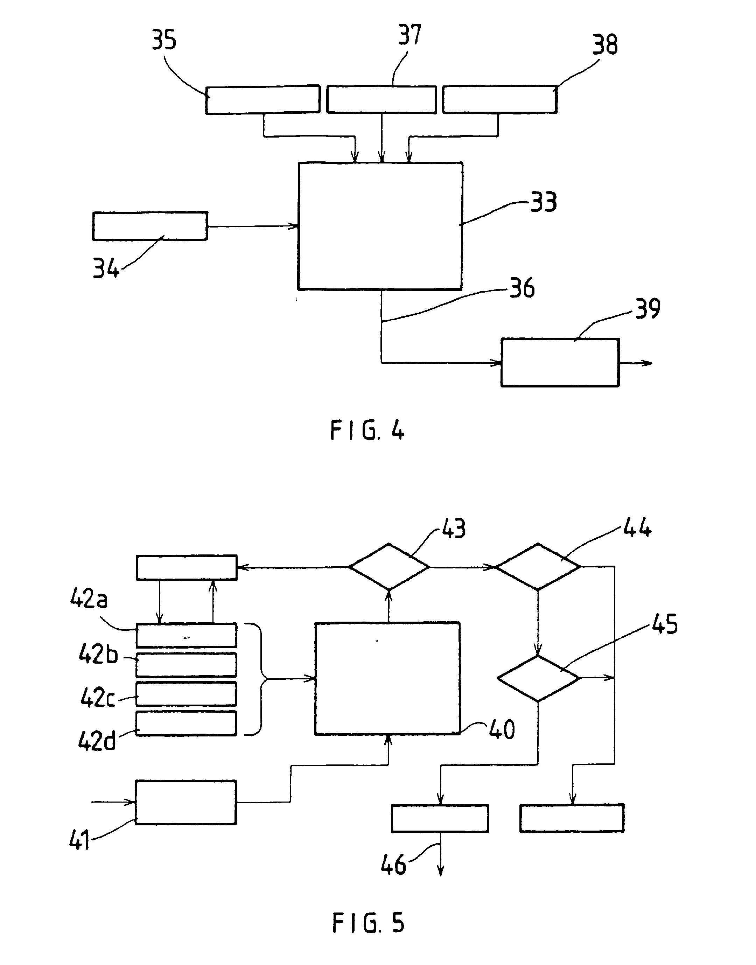

In one particular application of this integrated circuit, related to its use in remote alarm systems, standard application software is masked into the ROM memory (25) by lithographic techniques at the time of manufacture of the integrated circuit. Referring to Figures 4 and 5, the application software consists of an encryption algorithm (33) and a decryption algorithm (40).

The integrated circuit (21) may be configured to perform either encryption or decryption by enabling either the encryption algorithm (33) or the decryption algorithm (40) respectively.

Configuration data representing the configuration of the integrated circuit is stored in the EEPROM memory (27). The configuration data relates to the mode of operation of the integrated circuit, that is whether the encryption algorithm (33) or the decryption algorithm (40) has been enabled. Further configuration data comprises a fixed, 56-bit key value, or encryption key (34) and a variable value, or counter value (35). An arbitrary fixed data byte (37) is also stored in the EEPROM memory (27).

The operation of the application software in an integrated circuit (21) which has been configured for encryption is described below. When the encryption algorithm (33) is activated, the counter value (35) is incremented and the fixed byte (37) is appended to it. A checksum byte is computed from the counter value (35) and the fixed data byte (37) and is further appended to the counter value. The counter value (35) is 40-bits wide so that when the counter value is appended by the fixed byte (37) and the checksum byte (38), a 56-bit variable is obtained. Any algorithm may be used to compute the checksum, for example, a 16-bit cyclic redundancy check. The counter value, appended by the fixed and the checksum byte is encrypted together with the encryption key (34) by means of the encryption algorithm (33) to produce a unique 56-bit output value at (36). The output value from the encryption algorithm (33) is converted to serial form by a parallel-to-serial converter (39).

The serial data stream produced at the output of the parallel-to-serial converter (39) is transmitted by means of a radio-frequency or an infra-red transmitter front-end (not shown). This output data stream is configurable to conform to the timing waveform requirements of the particular transmitter type which may be used in a given application.

In use, up to four integrated circuits (21) configured for encryption may be linked to a single integrated circuit (21) configured for decryption, to form an operable set of devices. The configuration data of the decryption integrated circuit must provide for the decryption algonthm (40) to be enabled. Furthermore, each of the encryption integrated circuits must be configured with a unique encryption key (34) and with the same fixed data byte (37). The decryption integrated circuit is configured with the encryption key (34) of each of the linked encryption integrated circuits, up to a maximum of four such keys, and with the common fixed data byte (37). The decryption integrated circuit is further configured with a counter value for each of the linked encryption integrated circuits, up to a maximum of four.

A radio-frequency of infra-red receiver (not shown) acts as a front-end to the integrated circuit (21) which is configured for decryption, to receive a data stream transmitted by any one of the encryption integrated circuits. The receiver type is selected to match the transmitters used with the encryption integrated circuits.

The operation of the application software in an integrated circuit which has been configured for decryption is described in the discussion which follows. A serial data stream which is received by the receiver front-end (not shown) is converted into a received 56-bit data word by a serial-to-parallel converter (41). The data word is decrypted by applying the decryption algorithm (40) and a decryption key (42a). It will be obvious to a person skilled in the art that where the decryption algorithm (40) is the inverse of the encryption algorithm (33), and where the decryption key (42a) is the same as the encryption key (34), then the decrypted data word will be a 56-bit data word made up of the counter value (35), followed by the fixed byte (37) and the checksum byte (38) which was transmitted in encrypted form as described above.

An additional checksum byte is computed from the decrypted counter value and the decrypted fixed byte using an identical algorithm to the checksum algorithm that was used prior to encryption to compute the checksum byte (38). The received checksum byte and the computed checksum byte are compared at (43) and, if they are not the same, then either data corruption has occurred during transmission, or an incorrect decryption key has been used in the decryption process. If the received and computed checksum bytes do not match, the received data word is again decrypted using another decryption key (42b) stored in the EEPROM memory (27) of the decryption integrated circuit and a checksum byte is computed and compared with the received checksum byte as above. The process is repeated until either all the stored decryption keys (42a), (42b), (42c) and (42d) have been used for decryption, or a computed checksum byte is found which matches the received, decrypted checksum byte. If no matching checksum bytes are found in this manner, the received data is discarded and the receiver continues to listen for other transmitted streams of data.

When matching checksum bytes are found, the received, decrypted fixed byte is compared at (44) against the fixed byte stored in the EEPROM (27) of the decryption integrated circuit. If the received and the stored fixed bytes do not match, the received data is discarded.

Lastly, the received, decrypted counter value is tested at (45) for validity against the stored counter value corresponding to the encryption key (42a), (42b), (42c) or (42d) which produced matching checksum bytes. For the received, decrypted counter value to be valid, it must be greater than the corresponding counter value stored in the decryption integrated circuit, since the counter value (35) in the encryption integrated circuit is incremented, prior to encryption and transmission. In addition the received counter value must be less than the stored counter value plus a deadband of 2047, to allow for accidental or deliberate activation of the encryption integrated circuit when it is out of transmission range of the decryption integrated circuit. Once the received counter value has been tested and found to be valid, an output signal is generated by the integrated circuit, at (46), according to the requirements of the application.

The output (46) of the decryption integrated circuit (21) may be configured to toggle between two states, equivalent to an "on" or an "off" state, or to be a pulse of selectable duration between 0,1 and 2,5 seconds. Alternatively, the output (46) may be configured to emulate the protocol of other known types of integrated circuits. An output signal (46) conforming to the emulated protocol is generated each time the decryption integrated circuit (21) receives a valid data stream from an encryption integrated circuit. Some of the protocols which may be emulated are the MC145026/VD5026 data format from Motorola of the USA, the MM53200/MM57C200 data format from National Semiconductor of the USA, or the TEA5500/1 data format from Philips of the Netherlands.

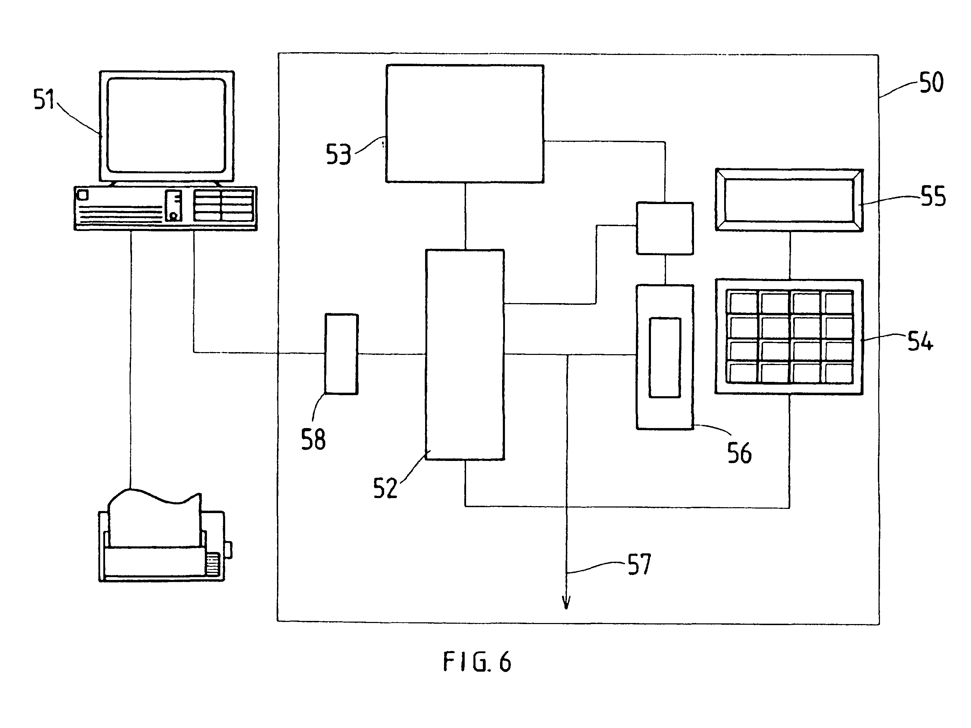

Turning now to Figure 6, the EEPROM memory (27) in which the configuration of the integrated circuit (21) is stored, is configured by means of a programming unit (50) which may, optionally, be connected to a computer (51) such as an IBM-compatible personal computer (PC). The programming unit (50) comprises a micro-processor (52), a power supply (53), a keypad (54) for data entry, a liquid crystal display (LCD) (55) and a programming socket (56) to receive the integrated circuit (21). The programming unit (50) may be connected, at (57), to a parallel expansion socket (not shown) for external programming of additional integrated circuits (21). The programming unit (50) is connectable to the computer (51) through an RS232C communication port (58). The programming unit may be used in a stand-alone mode, in which case connection to the PC (51) is not necessary, and all configuration is performed via the keypad (54).

Each integrated circuit (21) which is configured for encryption is configured with its own fixed unique encryption key (34) by generating a 56-bit random number in the programmer (50) and downloading this value to the EEPROM memory (27) of the integrated circuit. A single integrated circuit (21) configured for decryption is linked with up to four integrated circuits configured for encryption, by configuring its EEPROM memory (27) with the respective encryption keys (42a), (42b), (42c) and (42d) of the encryption integrated circuits to which it is to be linked.

The output of an integrated circuit (21) configured for encryption may be used to cause a light-emitting-diode (LED) (not shown) to flash intermittently to provide an indication of low supply voltage. When a low supply voltage is detected, a warning code is transmitted by the encryption integrated circuit to the integrated circuit (21) configured for decryption, to which it is linked, and an output of the decryption integrated circuit will then be set, and this output may be used to illuminate an LED or to sound a buzzer to provide audible and visual warning of the low supply voltage. A similar warning code may be transmitted when an encryption integrated circuit is unable to write data to the EEPROM memory (27) due to a malfunction.

When integrated circuits (21) are used in a motor vehicle alarm system, for example, one or more encryption integrated circuits must be linked with a single integrated circuit configured for decryption in the manner outlined above, that is, the encryption key of each encryption integrated circuit is loaded into the configuration memory of the decryption integrated circuit where it is then available for use by the decryption algorithm (40). To ensure security, the encryption integrated circuit can be made to flash an LED (not shown) to enable the optical recovery of the encryption key in an encrypted form. The encrypted flashes of light may be detected by a receiver and decrypted and down-loaded to a decryption integrated circuit (21). In this manner, a service station may quickly and easily reconfigure the alarm system on a motor vehicle. To ensure synchronisation between the encryption and decryption integrated circuits, in an operable set, all counter values stored in the respective memories of these devices are initialised to have zero values.

This embodiment of the invention has been described with particular reference to a remote alarm system, but the scope of the invention is clearly not limited to this application.

The invention therefore provides a low-cost, configurable application oriented controller suitable for use in applications requiring secure data transmission.

## Claims

1. An electronic coding device (21) for selectively encrypting or decrypting data signals, comprising:
a processor (24) to code digital data in accordance with a selectable one of a predetermined encryption and a predetermined decryption algorithm (33,40), the processor (24) having an input for receiving a digital input signal and an output tor generating a coded digital output signal; and
a configuration storage memory (27) connected to the processor (24),
**characterised in that**
the configuration storage memory (27) is instructable to select one of the predetermined encryption algorithm and predetermined decryption algorithm and to convert the coded digital output signal produced by the processor (24) after encryption and after decryption to conform to any one of a number of predetermined protocols.

2. An electronic coding device as claimed in claim 1 **characterised in that** the configuration storage memory (27) is instructable by means of configuration data stored in the configuration storage memory.

3. An electronic coding device as claimed in claim 2 **characterised in that** the configuration storage memory (27) also contains a number of key values (34, 42a, 42b, 42c, 42d) and a number of variable values (35).

4. An electronic coding device as claimed in claim 3 **characterised in that** the predetermined encryption algorithm (33) encrypts a key value (34) and a variable value (35) contained in the configuration storage memory (27), to produce an encrypted value (36).

5. An electronic coding device as claimed in claim 4 **characterised in that** the predetermined decryption algorithm (40) decrypts a previously encrypted value (36) by using a key value (42a, 42b, 42c, 42d) contained in the configuration storage memory (27).

6. An electronic coding device as claimed in any one of claims 2 to 5 **characterised in that** the configuration storage memory (27) is connectable to a programming means (50) for accessing and altering any of the configuration data, the key values and the variable values in the configuration storage memory.

7. An electronic coding device as claimed in any one of the preceding claims **characterised in that** the configuration storage memory (27) is a non-volatile, electrically-erasable, programmable, read-only memory.

8. An electronic coding device as claimed in claim 5 **characterised in that** one of the predetermined protocols is the conversion of the coded digital output signal (36) produced by the processor, to a binary signal which alternates between an "off" state and an "on" state at a selectable frequency.

9. An electronic coding device as claimed in claim 5 **characterised in that** another one of the predetermined protocols is the conversion of the coded digital output signal (36) produced by the processor to a pulse of selectable duration.

10. An electronic coding device as claimed in claim 5 **characterised in that** yet another one of the predetermined protocols is the conversion of the coded digital output signal (36) produced by the processor to a pulse train emulating any one of a number of different data format standards.

11. An electronic coding device as claimed in any one of the preceding claims **characterised in that** it includes a means for indicating a low supply voltage to the device.

12. An electronic coding device as claimed in claim 7 **characterised in that** it includes a means for indicating a malfunction of the non-volatile electrically-erasable, programmable, read-only memory.

13. An electronic coding device as claimed in any one of claims 3 to 12 **characterised in that** it includes a display means (55) for displaying, in encrypted form, any of the key values contained in the configuration storage memory.

14. An electronic coding device as claimed in claim 13 **characterised in that** the display means (55) is a light-emitting diode.

15. A method of configuring an electronic coding device for selectively encrypting or decrypting data signals, compnsing the step of:
interfacing a programming means (50) to a configuration storage memory (27) connected to a processor (24) for coding digital data in accordance with a selected one of a predetermined encryption and a predetermined decryption algorithm (33,40), the processor (24) having an input for receiving a digital input signal and an output for generating a coded digital output signal; and
**characterised in that** it includes the further steps of
instructing the configuration storage memory (27 to select one of the predetermined encryption algorithm and predetermined decryption algorithm; and instructing the configuration storage memory (27) to selectively convert the coded digital output signal produced by the processor (24) after encryption and after decryption to conform to any one of a number of predetermined protocols.

16. A method of configuring an electronic coding device as claimed in claim 15, **characterised in that** the configuration storage memory (27) is instructed by storing configuration data in the configuration storage memory.

17. A method of configuring an electronic coding device as claimed in claim 16 **characterised in that** it includes the further step of storing a number of key values (34, 42a, 42b, 42c, 42d) and a number of variable values (35) in the configuration storage memory.

18. A method of configuring an electronic coding device as claimed in claim 17 **characterised in that** the predetermined encryption algorithm (33, 40) is encrypting a key value (34) and a variable value (35) contained in the configuration storage memory (27), to produce an encrypted value (36).

19. A method of configuring an electronic coding device as claimed in claim 18 **characterised in that** the predetermined decryption algorithm (33, 40) is decrypting a previously encrypted value (36) by using a key value (42a, 42b, 42c, 42d) contained in the configuration storage memory (27).

20. A method of configuring an electronic coding device as claimed in claim 19 **characterised in that** it includes the further step of linking one electronic coding device (21) configured for decryption to a number of electronic coding devices (21) configured for encryption, to form an operable set of electronic coding devices, by storing a different key value (34) into the configuration storage memory (27) of each of the encryption electronic coding devices, and storing all of the different key values (42a, 42b, 42c, 42d) into the configuration storage memory (27) of the decryption electronic coding device.

21. A method of configuring an electronic coding device as claimed in claim 20 **characterised in that** it includes the further step of synchronising the operable set of coding devices (21) by initialising the variable value (35) stored in the configuration storage memory (27) of each of the electronic devices, to be a known, preselected value.

22. A method of configuring an electronic coding device as claimed in claim 21 **characterised in that** the need for resynchronising an operable set of electronic coding devices (21) is avoided, when power is removed from any electronic coding device in the set, by storing the configuration data, key values (34, 42a, 42b, 42c, 42d) and variable values (35) associated with each electronic coding device in a respective non-volatile configuration storage memory (27) in each coding device.

## Patentansprüche

1. Elektronische Codiervorrichtung (21) zum selektiven Verschlüsseln oder Entschlüsseln von Datensignalen, umfassend:
einen Prozessor (24) zum Codieren digitaler Daten in Übereinstimmung mit einem wählbaren eines vorbestimmten Verschlüsselungs- und eines vorbestimmten Entschlüsselungsalgorithmus (33, 40), wobei der Prozessor (24) einen Eingang zum Empfangen eines digitalen Eingabesignals und einen Ausgang zum Erzeugen eines codierten digitalen Ausgabesignals aufweist; und
einen mit dem Prozessor (24) verbundenen Konfigurationsspeicher (27),
**dadurch gekennzeichnet, daß** der Konfigurationsspeicher (27) instruierbar ist, einen des vorbestimmten Verschlüsselungsalgorithmus und des vorbestimmten Entschlüsselungsalgorithmus zu wählen und das durch den Prozessor (24) erzeugte codierte digitale Ausgabesignal nach der Verschlüsselung und nach der Entschlüsselung umzuwandeln, um einem aus einer Anzahl von vorbestimmten Protokollen zu genügen.

2. Elektronische Codiervorrichtung nach Anspruch 1, **dadurch gekennzeichnet, daß** der Konfigurationsspeicher (27) mittels in dem Konfigurationsspeicher gespeicherter Konfigurationsdaten instruierbar ist.

3. Elektronische Codiervorrichtung nach Anspruch 2, **dadurch gekennzeichnet, daß** der Konfigurationsspeicher (27) ferner eine Anzahl von Schlüsselwerten (34, 42a, 42b, 42c, 42d) und eine Anzahl variabler Werte (35) enthält.

4. Elektronische Codiervorrichtung nach Anspruch 3, **dadurch gekennzeichnet, daß** der vorbestimmte Verschlüsselungsalgorithmus (33) einen Schlüsselwert (34) und einen variablen Wert (35), die in dem Konfigurationsspeicher (27) enthalten sind, verschlüsselt, um einen verschlüsselten Wert (36) zu erzeugen.

5. Elektronische Codiervorrichtung nach Anspruch 4, **dadurch gekennzeichnet, daß** der vorbestimmte Entschlüsselungsalgorithmus (40) einen vorher verschlüsselten Wert (36) unter Verwendung eines in dem Konfigurationsspeicher (27) enthaltenen Schlüsselwerts (42a, 42b, 42c, 42d) entschlüsselt.

6. Elektronische Codiervorrichtung nach einem der Ansprüche 2 bis 5, **dadurch gekennzeichnet, daß** der Konfigurationsspeicher (27) mit einem Programmiermittel (50) verbindbar ist, um auf beliebige, der Konfigurationsdaten, der Schlüsselwerte und der variablen Werten in dem Konfigurationsspeicher zuzugreifen und diese zu ändern.

7. Elektronische Codiervorrichtung nach einem der vorangehenden Ansprüche, **dadurch gekennzeichnet, daß** der Konfigurationsspeicher (27) ein nicht-flüchtiger, elektrisch löschbarer, programmierbarer Nur-LeseSpeicher ist.

8. Elektronische Codiervorrichtung nach Anspruch 5, **dadurch gekennzeichnet, daß** eines der vorbestimmten Protokolle die Umwandlung des durch den Prozessor erzeugten codierten digitalen Ausgabesignals (36) zu einem binären Signal darstellt, das zwischen einem "Aus"-Zustand und einem "Ein"-Zustand mit einer wählbaren Frequenz alterniert.

9. Elektronische Codiervorrichtung nach Anspruch 5, **dadurch gekennzeichnet, daß** ein anderes der vorbestimmten Protokolle die Umwandlung des durch den Prozessor erzeugten codierten digitalen Ausgabesignals (36) zu einem Puls mit wählbarer Dauer darstellt.

10. Elektronische Codiervorrichtung nach Anspruch 5, **dadurch gekennzeichnet, daß** noch ein anderes der vorbestimmten Protokolle die Umwandlung des durch den Prozessor erzeugten codierten digitalen Ausgabesignals (36) zu einem Pulszug darstellt, der einen aus einer Anzahl verschiedener Datenformatstandards emuliert.

11. Elektronische Codiervorrichtung nach einem der vorangehenden Ansprüche, **dadurch gekennzeichnet, daß** sie ein Mittel zum Anzeigen einer niedrigen Versorgungsspannung an der Vorrichtung umfaßt.

12. Elektronische Codiervorrichtung nach Anspruch 7, **dadurch gekennzeichnet, daß** sie ein Mittel zum Angeben einer Fehlfunktion des nicht-flüchtigen, elektrisch löschbaren, programmierbaren Nur-Lese-Speichers enthält.

13. Elektronische Codiervorrichtung nach einem der Ansprüche 3 bis 12, **dadurch gekennzeichnet, daß** sie ein Anzeigemittel (55) zum Anzeigen eines der in dem Konfigurationsspeicher enthaltenen Schlüsselwerte in verschlüsselter Form enthält.

14. Elektronische Codiervorrichtung nach Anspruch 13, **dadurch gekennzeichnet, daß** das Anzeigemittel (55) eine lichtemittierende Diode ist.

15. Verfahren zum Konfigurieren einer elektronischen Codiervorrichtung zum selektiven Verschlüsseln oder Entschlüsseln von Datensignalen, umfassend die Schritte:
Verbinden eines Programmiermittels (50) mit einem Konfigurationsspeicher (27), der mit einem Prozessor (24) zum Codieren digitaler Daten in Übereinstimmung mit einem gewählten eines vorbestimmten Verschlüsselungs- und eines vorbestimmten Entschlüsselungsalgorithmus (33, 40) verbunden ist, wobei der Prozessor (24) einen Eingang zum Empfangen eines digitalen Eingabesignals und einen Ausgang zum Erzeugen eines codierten digitalen Ausgabesignals aufweist; und
**dadurch gekennzeichnet, daß** es die weiteren Schritte umfaßt:
Instruieren des Konfigurationsspeichers (27), einen des vorbestimmten Verschlüsselungsalgorithmus und des vorbestimmten Entschlüsselungsalgorithmus zu wählen, und
Instruieren des Konfigurationsspeichers (27), das durch den Prozessor (24) erzeugte codierte digitale Ausgabesignal nach der Verschlüsselung und nach der Entschlüsselung selektiv umzuwandeln, um einem aus einer Anzahl vorbestimmter Protokolle zu genügen.

16. Verfahren zum Konfigurieren einer elektronischen Codiervorrichtung nach Anspruch 15, **dadurch gekennzeichnet, daß** der Konfigurationsspeicher (27) durch Speichern von Konfigurationsdaten im Konfigurationsspeicher instruiert wird.

17. Verfahren zum Konfigurieren einer elektronischen Codiervorrichtung nach Anspruch 16, **dadurch gekennzeichnet, daß** es den weiteren Schritt des Speicherns einer Anzahl von Schlüsselwerten (34, 42a, 42b, 42c, 42d) und einer Anzahl variabler Werte (35) im Konfigurationsspeicher umfaßt.

18. Verfahren zum Konfigurieren einer elektronischen Codiervorrichtung nach Anspruch 17, **dadurch gekennzeichnet, daß** der, vorbestimmte Verschlüsselungsalgorithmus (33, 40) einen Schlüsselwert (34) und einen variablen Wert (35), die in dem Konfigurationsspeicher (27) enthalten sind, verschlüsselt, um einen verschlüsselten Wert (36) zu erzeugen.

19. Verfahren zum Konfigurieren einer elektronischen Codiervorrichtung nach Anspruch 18, **dadurch gekennzeichnet, daß** der vorbestimmte Entschlüsselungsalgorithmus (33, 40) einen vorher verschlüsselten Wert (36) unter Verwendung eines im Konfigurationsspeichers (27) enthaltenen Schlüsselswerts (42a, 42b, 42c, 42d) entschlüsselt.

20. Verfahren zum Konfigurieren einer elektronischen Codiervorrichtung nach Anspruch 19, **dadurch gekennzeichnet, daß** es den weiteren Schritt enthält:
Verbinden einer zum Entschlüsseln konfigurierten elektronischen Codiervorrichtung (21) mit einer Anzahl von zum Verschlüsseln konfigurierten elektronischen Codiervorrichtungen (21), um einen funktionsfähigen Satz elektronischer Codiervorrichtungen zu bilden durch Speichern eines verschiedenen Schlüsselwerts (34) in den Konfigurationsspeicher (27) jeder der elektronischen Verschlüsselungs-Codiervorrichtungen und durch Speichern aller der verschiedenen Schlüsselwerte (42a, 42b, 42c, 42d) in den Konfigurationsspeicher (27) der elektronischen Entschlüsselungs-Codiervorrichtung.

21. Verfahren zum Konfigurieren einer elektronischen Codiervorrichtung nach Anspruch 20, **dadurch gekennzeichnet, daß** es den weiteren Schritt umfaßt:
Synchronisieren des funktionsfähigen Satzes von Codiervorrichtungen (21) durch Initialisieren des in dem Konfigurationsspeicher (27) jeder der elektronischen Vorrichtungen gespeicherten variablen Werts (35) auf einen bekannten vorgewählten Wert.

22. Verfahren zum Konfigurieren einer elektronischen Codiervorrichtung nach Anspruch 21, **dadurch gekennzeichnet, daß** die Notwendigkeit zum Resynchronisieren eines funktionsfähigen Satzes elektronischer Codiervorrichtungen (21) vermieden wird, wenn die Energie von einer elektronischen Codiervorrichtung in dem Satz entfernt wird, durch Speichern der jeder elektronischen Codiervorrichtung zugeordneten Konfigurationsdaten, Schlüsselwerte (34, 42a, 42b, 42c, 42d) und variablen Werte (35) in einem jeweiligen nicht-flüchtigen Konfigurationsspeicher (27) in jeder Codiervorrichtung.

## Revendications

1. Dispositif de codage électronique (21) pour le cryptage ou le décryptage sélectif de signaux de données, comprenant :
un processeur (24) pour coder des données numériques conformément à un algorithme sélectionnable parmi un algorithme prédéterminé de cryptage et un algorithme prédéterminé de décryptage (33, 40), le processeur (24) ayant une entrée pour recevoir un signal numérique d'entrée et une sortie pour engendrer un signal numérique codé de sortie ; et
une mémoire de stockage de configuration (27) connectée au processeur (24) ;
**caractérisé en ce que** :
la mémoire de stockage de configuration (27) peut recevoir des instructions pour sélectionner un parmi l'algorithme prédéterminé de cryptage et l'algorithme prédéterminé de décryptage et convertir le signal numérique codé de sortie produit par le processeur (24) après cryptage et après décryptage afin de se conformer à un quelconque d'une pluralité de protocoles prédéterminés.

2. Dispositif de codage électronique suivant la revendication 1, **caractérisé en ce que** la mémoire de stockage de configuration (27) peut recevoir des instructions au moyen de données de configuration stockées dans la mémoire de stockage de configuration.

3. Dispositif de codage électronique suivant la revendication 2, **caractérisé en ce que** la mémoire de stockage de configuration (27) contient également une pluralité de valeurs de clé (34, 42a, 42b, 42c, 42d) et une pluralité de valeurs variables (35).

4. Dispositif de codage électronique suivant la revendication 3, **caractérise en ce que** l'algorithme prédéterminé de cryptage (33) crypte une valeur de clé (34) et une valeur variable (35) contenues dans la mémoire de stockage de configuration (27), pour produire une valeur cryptée (36).

5. Dispositif de codage électronique suivant la revendication 4, **caractérisé en ce que** l'algorithme prédéterminé de décryptage (40) décrypte une valeur précédemment cryptée (36) par utilisation d'une valeur de clé (42a, 42b, 42c, 42d) contenue dans la mémoire de stockage de configuration (27).

6. Dispositif de codage électronique suivant une quelconque des revendications 2 à 5, **caractérisé en ce que** la mémoire de stockage de configuration (27) est connectable à un moyen de programmation (50) pour accéder et modifier une quelconque des données de configuration, des valeurs de clé et des valeurs variables dans la mémoire de stockage de configuration.

7. Dispositif de codage électronique suivant une quelconque des revendications précédentes, **caractérisé en ce que** la mémoire de stockage de configuration (27) est une mémoire morte programmable, électriquement effaçable, non volatile.

8. Dispositif de codage électronique suivant la revendication 5, **caractérisé en ce qu'**un des protocoles prédéterminés est la conversion du signal numérique codé de sortie (36), produit par le processeur, en un signal binaire qui alterne entre un état "inactif" et un état "actif", à une fréquence sélectionnable.

9. Dispositif de codage électronique suivant la revendication 5, **caractérisé en ce qu'**un autre des protocoles prédéterminés est la conversion du signal numérique codé de sortie (36), produit par le processeur, en une impulsion de durée sélectionnable.

10. Dispositif de codage électronique suivant la revendication 5, **caractérisé en ce qu'**encore un autre des protocoles prédéterminés est la conversion du signal numérique codé de sortie (36), produit par le processeur, en un train d'impulsions émulant une quelconque d'une pluralité de normes différentes de format de données.

11. Dispositif de codage électronique suivant une quelconque des revendications précédentes, **caractérisé en ce qu'**il comprend un moyen d'indication d'une faible tension d'alimentation au dispositif.

12. Dispositif de codage électronique suivant la revendication 7, **caractérisé en ce qu'**il comprend un moyen d'indication d'un défaut de fonctionnement de la mémoire morte programmable, électriquement effaçable, non volatile.

13. Dispositif de codage électronique suivant une quelconque des revendications 3 à 12, **caractérisé en ce qu'**il comprend un moyen d'affichage (55) pour afficher, sous forme cryptée, une quelconque des valeurs de clé contenues dans la mémoire de stockage de configuration.

14. Dispositif de codage électronique suivant la revendication 13, **caractérisé en ce que** le moyen d'affichage (55) est une diode émettrice de lumière.

15. Procédé de configuration d'un dispositif de codage électronique pour le cryptage ou le décryptage sélectif de signaux de données, comprenant l'étape de :
mise en interface d'un moyen de programmation (50) avec une mémoire de stockage de configuration (27) connectée à un processeur (24) pour coder des données numériques conformément à un algorithme choisi parmi un algorithme prédéterminé de cryptage et un algorithme prédéterminé de décryptage (33, 40), le processeur (24) ayant une entrée pour recevoir un signal d'entrée numérique et une sortie pour engendrer un signal numérique codé de sortie, et
**caractérisé en ce qu'**il comprend en outre les étapes de :
fourniture d'instruction à la mémoire de stockage de configuration (27) pour choisir un parmi l'algorithme prédéterminé de cryptage et l'algorithme prédéterminé de décryptage ; et
fourniture d'instruction à la mémoire de stockage de configuration (27) pour convertir sélectivement le signal numérique codé de sortie produit par le processeur (24) après cryptage et après décryptage en conformité à un quelconque d'une pluralité de protocoles prédéterminés.

16. Procédé de configuration d'un dispositif de codage électronique suivant la revendication 15, **caractérisé en ce que** la mémoire de stockage de configuration (27) est instruite par stockage de donnes de configuration dans la mémoire de stockage de configuration.

17. Procédé de configuration d'un dispositif de codage électronique suivant la revendication 16, **caractérisé en ce qu'**il comprend en outre l'étape de stockage d'une pluralité de valeurs de clé (34, 42a, 42b, 42c, 42d) et d'une pluralité de valeurs variables (35) dans la mémoire de stockage de configuration.

18. Procédé de configuration d'un dispositif de codage électronique suivant la revendication 17, **caractérisé en ce que** l'algorithme prédéterminé de cryptage (33) crypte une valeur de clé (34) et une valeur variable (35) contenues dans la mémoire de stockage de configuration (27), pour produire une valeur cryptée (36).

19. Procédé de configuration d'un dispositif de codage électronique suivant la revendication 18, **caractérisé en ce que** l'algorithme prédéterminés de décryptage (40) décrypte une valeur précédemment cryptée (36), par utilisation d'une valeur de clé (42a, 42b, 42c, 42d) contenue dans la mémoire de stockage de configuration (27).

20. Procédé de configuration d'un dispositif de codage électronique suivant la revendication 19, **caractérisé en ce qu'**il comprend en outre l'étape de liaison d'un dispositif de codage électronique (21) configuré pour le décryptage à une pluralité de dispositifs de codage électroniques (21) configurés pour le cryptage, de manière à former un ensemble exploitable de dispositifs de codage électroniques, par stockage d'une valeur de clé différente (34) dans la mémoire de stockage de configuration (27) de chacun des dispositifs de codage électroniques de cryptage et stockage de toutes les valeurs de clé différentes (42a, 42b, 42c, 42d) dans la mémoire de stockage de configuration (27) du dispositif de codage électronique de décryptage.

21. Procédé de configuration d'un dispositif de codage électronique suivant la revendication 20, **caractérisé en ce qu'**il comprend en outre l'étape de synchronisation de l'ensemble exploitable de dispositifs de codage (21), par initialisation de la valeur variable (35), stockée dans la mémoire de stockage de configuration (27) de chacun des dispositifs électroniques, à une valeur prédéterminée connue.

22. Procédé de configuration d'un dispositif de codage électronique suivant la revendication 21, **caractérise en ce que** le besoin de resynchronisation d'un ensemble exploitable de dispositifs de codage électroniques (21) est évitée, lorsqu'on coupe l'alimentation d'un dispositif de codage électronique quelconque dans l'ensemble, par stockage des données de configuration, des valeurs de clé (34, 42a, 42b, 42c, 42d) et des valeurs variables (35) associées à chaque dispositif de codage électronique, dans une mémoire de stockage de configuration non volatile respective (27) dans chaque dispositif de codage.
